Europäisches Patentamt

European Patent Office

Office européen des brevets

(19)

(11) Numéro de publication: **0 060 742 B1**

(12) # FASCICULE DE BREVET EUROPEEN

(45) Date de publication du fascicule du brevet:
03.10.84

(51) Int. Cl.³: **C 01 B 17/50,** B 01 J 27/02, B 01 D 53/36

(21) Numéro de dépôt: **82400305.7**

(22) Date de dépôt: **22.02.82**

(54) **Catalyseurs et procédé d'oxydation de l'hydrogène sulfuré et ou des composés organiques du soufre en anhydride sulfureux.**

(30) Priorité: **13.03.81 FR 8105030**

(43) Date de publication de la demande:
**22.09.82 Bulletin 82/38**

(45) Mention de la délivrance du brevet:
**03.10.84 Bulletin 84/40**

(84) Etats contractants désignés:
**AT BE DE FR GB IT NL SE**

(56) Documents cités:
**GB - A - 769 996**
**US - A - 1 900 751**
**US - A - 4 092 404**

(73) Titulaire: **RHONE-POULENC SPECIALITES CHIMIQUES, "Les Miroirs" 18, Avenue d'Alsace, F-92400 Courbevoie (FR)**

(72) Inventeur: **Dupin, Thierry, 7, rue Robert de Luzarches, F-95140 Gardes/les/Gonesse (FR)**

(74) Mandataire: **Savina, Jacques et al, RHONE-POULENC RECHERCHES Service Brevets Chimie et Polymères 25, Quai Paul Doumer, F-92408 Courbevoie Cedex (FR)**

## Description

La présente invention concerne des catalyseurs et leur utilisation pour l'oxydation de l'hydrogène sulfuré et/ou des composés organiques du soufre en dioxyde de soufre.

Certains effluents industriels, et en particulier les effluents provenant des unités Claus, contiennent du soufre et/ou des composés polluants oxydables du soufre qui doivent être traités de manière à être transformés par oxydation en anhydride sulfureux. Les composés du soufre notamment présents dans ces effluents sont principalement l'hydrogène sulfuré et des composés organiques du soufre tels que le sulfure de carbone et/ou l'oxysulfure de carbone et/ou les mercaptans.

Il est connu de traiter des effluents contenant de l'hydrogène sulfuré en les brûlant à hautes températures, mais cette méthode est aujourd'hui obsolète tant à cause de la consommation d'énergie importante qu'elle entraîne que, techniquement, par la quantité d'oxygène qu'elle nécessite.

Par ailleurs, il a déjà été proposé des procédés catalytiques pour traiter des gaz contenant de l'hydrogène sulfuré; mais ces procédés présentent les inconvénients de n'être pas assez actifs catalytiquement, de ne pas réaliser l'oxydation complète de l'hydrogène sulfuré à une température suffisamment basse, et de présenter une durée de vie insuffisante.

C'est ainsi qu'il a déjà été proposé, selon le brevet US-A No 1900751, d'oxyder l'hydrogène sulfuré en dioxyde de soufre en présence d'un catalyseur comportant des éléments actifs déposés sur un support de gel de silice ou d'argile calcinée. Les éléments actifs étant choisis parmi les métaux suivants: nickel, fer, cobalt, manganèse, zinc, cuivre et éventuellement chrome, vanadium, molybdène, cérium, uranium, thorium, tungstène, silicium et carbone, et comportant jusqu'à 10% de composés du plomb, du bismuth, des métaux alcalins et des métaux alcalino-terreux; ces composés peuvent être des oxydes, des hydroxydes, des carbonates et des sulfates. Il est à noter que selon ce brevet, p. 5, lignes 94 à 96, les catalyseurs ainsi proposés sont tellement insatisfaisants qu'il est nécessaire d'augmenter la température de la réaction de 5% tous les 3 d.

Il a également déjà été proposé, selon le brevet anglais No 769996, un procédé d'oxydation d'hydrogène sulfuré en soufre en présence d'un catalyseur comportant des sulfates des métaux suivants: cadmium, cobalt, cuivre, fer, plomb, nickel, étain, argent et zinc, déposés sur un support d'alumine active ou d'argile.

Il a également été proposé, dans le brevet US-A No 4092404, un procédé d'oxydation d'hydrogène sulfuré en dioxyde de soufre en présence d'une proportion substantielle d'hydrogène, afin d'éviter la formation de $SO_3$, en présence d'un catalyseur comportant de l'oxyde de vanadium déposé sur un support d'oxyde réfractaire poreux non alcalin.

Il s'avère également que les composés organiques du soufre présentent un caractère polluant aussi nocif que celui de l'hydrogène sulfuré. Il était donc nécessaire de disposer de catalyseurs permettant l'élimination de l'hydrogène sulfuré et/ou des composés organiques du soufre en anhydride sulfureux.

La titulaire a mis au point des catalyseurs qui présentent une très grande activité catalytique pour réaliser l'oxydation en phase gazeuse de l'hydrogène sulfuré et/ou des composés organiques du soufre et éventuellement du soufre en dioxyde de soufre. De plus, ces catalyseurs présentent une durée de vie exceptionnelle.

La présente invention concerne en effet un catalyseur pour l'oxydation en anhydride sulfureux de l'hydrogène sulfuré et/ou des composés organiques du soufre et éventuellement du soufre, caractérisé en ce qu'il comporte de l'oxyde de titane ou des mélanges d'oxyde de titane/zircone ou d'oxyde de titane/silice, un sulfate d'un métal alcalino-terreux et au moins un des éléments pris dans le groupe constitué par le cuivre, l'argent, le zinc, le cadmium, l'yttrium, les lanthanides, le vanadium, le chrome, le molybdène, le tungstène, le manganèse, le fer, le cobalt, le rhodium, l'iridium, le nickel, le palladium, le platine, l'étain et le bismuth.

La présente invention concerne également un procédé d'oxydation simultanée en anhydride sulfureux de l'hydrogène sulfuré et/ou des composés organiques du soufre et éventuellement du soufre en phase gazeuse, caractérisé en ce que l'on fait passer un gaz contenant de l'hydrogène sulfuré et/ou au moins un composé organique du soufre, et éventuellement du soufre, sur un catalyseur comportant de l'oxyde de titane ou des mélanges d'oxyde de titane/zircone ou d'oxyde de titane/silice, un sulfate d'un métal alcalino-terreux et au moins un des éléments pris dans le groupe constitué par le cuivre, l'argent, le zinc, le cadmium, l'yttrium, les lanthanides, le vanadium, le chrome, le molybdène, le tungstène, le manganèse, le fer, le cobalt, le rhodium, l'iridium, le nickel, le palladium, le platine, l'étain et le bismuth.

De préférence, les catalyseurs selon l'invention contiennent de l'oxyde de titane, un sulfate d'un métal alcalino-terreux et au moins un élément pris dans le groupe A constitué par le cuivre, l'argent, le molybdène, le tungstène, le fer, le bismuth, et au moins un élément pris dans le groupe B constitué par les lanthanides, le chrome, le cobalt, le rhodium, l'iridium, le nickel, le palladium, le platine, le vanadium et l'étain.

Le catalyseur selon l'invention comporte un sulfate d'un métal alcalino-terreux choisi dans le groupe constitué par le calcium, le barium, le strontium et le magnésium.

Selon un mode de mise en œuvre préféré, le catalyseur comporte du sulfate de calcium. La résistance mécanique de ce catalyseur se révèle exceptionnelle.

La porportion en poids, rapportée au poids du catalyseur, en oxyde de titane ou d'oxyde de titane/zircone ou d'oxyde de titane/silice dans le catalyseur varie de préférence entre 60 et 99%, plus particulièrement entre 80 et 99%.

Lorsque l'on met en œuvre de l'oxyde de titane plus de l'oxyde de zirconium ou de l'oxyde de titane et de la silice, la proportion en poids d'oxyde de titane, par rapport à l'ensemble oxyde de titane + oxyde de zirconium ou oxyde de titane + silice, est supérieure à 30%, de préférence à 50%.

La proportion en poids, rapportée au poids de catalyseur, en sulfate d'un métal alcalino-terreux varie de préférence entre 1 et 40%, plus particulièrement entre 1 et 20%.

Le rapport atomique des éléments catalytiquement actifs présents dans le catalyseur par rapport aux éléments présents dans le support, c'est-à-dire le titane, le titane et le zirconium ou le titane et le silicium, est compris entre environ 0,00005 et 0,1.

Par ailleurs, selon la mise en œuvre préférée de l'invention, lorsque l'on ne met pas en œuvre de métaux précieux, le rapport atomique entre la totalité des éléments du groupe A et la totalité des éléments du groupe B présents dans le catalyseur est de préférence compris entre 0,1 et 10, plus particulièrement entre 0,5 et 5.

Lorsque l'on met en œuvre les métaux précieux du groupe VIII comme éléments catalytiquement actifs du groupe B, le rapport atomique défini ci-dessus est de préférence compris entre 20 et 1000, plus particulièrement entre 50 et 400.

Le catalyseur selon l'invention présente de préférence une surface spécifique, mesurée par la méthode B.E.T., comprise entre 20 et 500 m²/g, plus particulièrement entre 40 et 300 m²/g.

Le catalyseur selon l'invention peut être préparé par tout procédé approprié permettant d'obtenir soit un produit massique contenant l'oxyde de titane ou des mélanges d'oxyde de titane/zircone ou d'oxyde de titane/silice, le sulfate du métal alcalino-terreux et les éléments catalytiquement actifs, soit un produit constitué de l'oxyde de titane ou des mélanges d'oxyde de titane/zircone ou d'oxyde de titane/silice, imprégné superficiellement par le sulfate du métal alcalino-terreux et les éléments catalytiquement actifs.

Selon un premier mode de préparation du catalyseur selon l'invention, on opère par imprégnation du corps façonné d'oxyde de titane ou des mélanges d'oxyde de titane/zircone ou d'oxyde de titane/silice, successivement, avec un composé apportant l'anion sulfate puis avec un composé apportant le cation alcalino-terreux, de façon à former le sulfate du métal alcalino-terreux à l'intérieur du corps façonné à base d'oxyde de titane puis, après éventuellement séchage et calcination, on opère l'imprégnation des éléments catalytiquement actifs, puis éventuellement séchage et calcination.

Selon ce premier mode préféré de préparation, le corps façonné à base d'oxyde de titane utilisé peut notamment être obtenu selon le procédé décrit dans la demande européenne N° 38741 au nom de la titulaire. Ce procédé comporte les étapes suivantes:

1. on opère le malaxage d'un mélange comportant:

— de 1 à 40% en poids d'eau,
— de 0 à 15% en poids d'additif de mise en forme,
— de 45 à 99% en poids d'une poudre d'oxyde de titane mal cristallisé et/ou amorphe présentant une perte au feu comprise entre 1 et 50%;

2. on opère la mise en forme du mélange;

3. on sèche, puis on calcine éventuellement le corps façonné obtenu à une température comprise entre 300 et 900° C, de préférence entre 350 et 800° C;

4. on imprègne celui-ci avec le sulfate du métal alcalino-terreux ou un composé apportant l'anion sulfate et un composé apportant le cation alcalino-terreux; on sèche, puis on calcine éventuellement à une température comprise entre 300 et 900° C, de préférence entre 350 et 800° C, et

5. on imprègne le produit obtenu avec les éléments catalytiquement actifs ou leurs précurseurs (composés susceptibles de donner par chauffage ces éléments ou leurs oxydes), on sèche éventuellement, puis on calcine à une température comprise entre 300 et 900° C, de préférence entre 350 et 800° C.

Les composés apportant l'anion sulfate sont choisis dans le groupe comportant l'acide sulfurique et les sulfates solubles en solution aqueuse, en particulier le sulfate d'ammonium et le sulfate d'hydroxylamine.

Les composés apportant le cation alcalino-terreux sont choisis dans le groupe des sels solubles en solution aqueuse d'alcalino-terreux, en particulier parmi les nitrates, chlorures, acétates des métaux alcalino-terreux.

Le rapport en poids en $SO_4$ et $TiO_2$ dans le catalyseur est généralement compris entre 0,01 et 0,15, de préférence entre 0,05 et 0,10.

Le rapport en poids entre l'alcalino-terreux et l'oxyde de titane dans le catalyseur est généralement compris entre 0,004 et 0,20, de préférence entre 0,02 et 0,15.

Selon un second mode de préparation du catalyseur selon l'invention, on opère la mise en forme d'un mélange contenant l'oxyde de titane et le sulfate du métal alcalino-terreux ou du mélange d'un composé apportant l'anion sulfate et d'un composé apportant le cation alcalino-terreux puis, après éventuellement séchage et calcination, on opère l'imprégnation avec les éléments catalytiquement actifs ou leurs précurseurs, puis on sèche et calcine.

La mise en forme peut notamment être effectuée par le procédé comportant les étapes suivantes et dont les grandes lignes ont été décrites précédemment:

1. on opère le malaxage d'un mélange comportant:
— de 1 à 40% en poids d'eau,
— de 0 à 15% en poids d'additif de mise en forme,
— de 45 à 99% en poids d'une poudre constituée d'oxyde de titane mal cristallisé et/ou amorphe, du sulfate du métal alcalino-terreux ou du mélange du composé apportant le sulfate et du composé apportant le cation alcalino-terreux;

2. on opère la mise en forme du mélange, on sèche, puis on calcine éventuellement les produits obtenus à une température comprise entre 300 et 900° C, de préférence entre 350 et 800° C, et

3. on imprègne les produits obtenus par les éléments catalytiquement actifs ou leurs précurseurs, on sèche éventuellement, puis on calcine les produits obtenus à une température comprise entre 300 et 900° C, de préférence entre 350 et 800° C.

Les composés apportant l'anion sulfate ou le cation alcalino-terreux et leurs proportions sont ceux qui ont été décrits ci-dessus dans le premier mode de préparation du catalyseur selon l'invention.

Selon un troisième mode de préparation du catalyseur selon l'invention, on utilise comme matière première l'oxyde de titane issu de l'attaque sulfurique de l'ilménite après hydrolyse, filtration et séchage, et contenant des anions sulfates sous forme, par exemple, d'acide sulfurique, de sulfate de titanyle, de sulfate de titane et/ou de sels basiques, par exemple de formule générale:
$Ti (OH)_x (HSO_4)_y$ avec $x+y=4$.

Selon une première variante de ce troisième mode de préparation du catalyseur de l'invention, on opère selon les étapes suivantes:

1. on opère le malaxage d'un mélange comportant:

— de 1 à 40% en poids d'eau,
— de 0 à 15% en poids d'additif de mise en forme,
— de 45 à 99% en poids d'une poudre constituée d'un composé apportant le cation alcalino-terreux et d'oxyde de titane provenant de l'attaque sulfurique de l'ilménite et contenant des anions sulfates,

le rapport en poids dans la poudre entre $SO_4$ et $TiO_2$ étant compris entre 0,01 et 0,15, de préférence entre 0,05 et 0,10, le rapport en poids dans la poudre entre l'alcalino-terreux et l'oxyde de titane étant compris entre 0,004 et 0,20, de préférence entre 0,02 et 0,15; la perte au feu de cette poudre étant comprise entre 1 et 50%;

2. on opère la mise en forme du mélange;

3. on sèche puis on calcine éventuellement les produits obtenus à une température comprise entre 300 et 900° C, de préférence entre 350 et 800° C, et

4. on opère l'imprégnation des éléments catalytiquement actifs ou de leurs précurseurs, puis on sèche éventuellement et on calcine les produits obtenus à une température comprise entre 300 et 900° C, de préférence entre 350 et 800° C.

Selon une deuxième variante de ce troisième mode de préparation du catalyseur selon l'invention, on opère selon les étapes suivantes:

1. on opère le malaxage d'un mélange comportant:

— de 1 à 40% en poids d'eau,
— de 0 à 15% en poids d'additif de mise en forme,
— de 45 à 99% en poids d'une poudre d'oxyde de titane provenant de l'attaque sulfurique de l'ilménite et contenant des anions sulfates, le rapport en poids dans la poudre entre $SO_4$ et $TiO_2$ étant compris entre 0,01 et 0,15, de préférence entre 0,05 et 0,10; la perte au fer de cette poudre étant de préférence comprise entre 1 et 50%;

2. on opère la mise en forme du mélange, puis on sèche et on calcine éventuellement à une température comprise entre 300 et 900° C, de préférence entre 350 et 800° C;

3. on imprègne le produit façonné avec un composé soluble en solution aqueuse apportant le cation alcalino-terreux;

4. on sèche puis on calcine éventuellement les produits obtenus à une température comprise entre 300 et 900° C, de préférence entre 350 et 800° C, puis on opère l'imprégnation avec les éléments catalytiquement actifs ou leurs précurseurs, et

5. on sèche éventuellement, puis on calcine les produits obtenus à une température comprise entre 300 et 900° C, de préférence entre 350 et 800° C.

Selon un quatrième mode de préparation du catalyseur selon l'invention, on opère la sulfatation d'un corps façonné à base d'oxyde de titane et contenant le cation alcalino-terreux. Cette sulfatation peut être réalisée à une température comprise entre 250 et 550° C par un gaz contenant de préférence un mélange d'anhydride sulfureux et d'air; les rapports en poids $SO_4/TiO_2$ métal alcalino-terreux/$TiO_2$ sont ceux qui ont été donnés ci-dessus.

Les produits ainsi préparés sont ensuite éventuellement séchés, puis calcinés à une température comprise entre 300 et 900° C, de préférence entre 350 et 800° C, puis imprégnés avec les éléments catalytiquement actifs ou leurs précurseurs, éventuellement séchés, puis calcinés à une température comprise entre 300 et 900° C, de préférence entre 350 et 800° C.

Dans ce mode de préparation du catalyseur selon l'invention, les éléments catalytiquement actifs sont introduits sous la forme de leurs sels solubles en solution aqueuse.

Le procédé d'oxydation en anhydride sulfureux de l'hydrogène sulfuré et/ou des composés organiques du soufre et éventuellement du soufre en phase gazeuse en présence du catalyseur de l'invention peut être réalisé par mise en contact d'un gaz renfermant de l'oxygène moléculaire avec l'effluent contenant lesdits produits. Ce gaz est généralement l'air, éventuellement de l'air enrichi en oxygène ou de l'oxygène pur. Ce gaz contient une quantité d'oxygène au moins égale, et de préférence supérieure, à la quantité stœchiométrique nécessaire pour l'oxydation en anhydride sulfureux de la totalité des produits. Avantageusement, la quantité d'oxygène présente dans le gaz représente un excès d'environ 15 à 100% par rapport à la stœchiométrie.

Le procédé de l'invention est mis en œuvre à des températures supérieures à environ 150° C, de préférence à des températures comprises entre 200 et 550° C.

La composition des gaz que l'on peut traiter selon le procédé de l'invention peut varier dans de larges limites. Généralement, les effluents industriels que l'on peut traiter selon l'invention contiennent de préférence de l'ordre de 0,5 à 5% en volume de composés soufrés.

Les quantités de catalyseurs utilisées sont de préférence telles que la VVh est comprise entre 1000 et 30 000, avantageusement entre 1500 et 10 000 (la VVh représentant le volume de gaz traité par volume de catalyseur et par heure).

Les exemples suivants illustrent l'invention sans en limiter la portée.

*Exemple 1 :*

Une suspension obtenue après hydrolyse du tétrachlorure de titane est lavée par décantation, filtrée, puis séchée en étuve à 110° C pendant 24 h. La poudre obtenue a une structure amorphe aux rayons X et sa PAF (perte au feu) est de 18%.

On opère le malaxage pendant 30 min du mélange constitué par cette poudre additionnée d'eau et de carboxyméthylcellulose dans les proportions suivantes:
- 66% de cette poudre,
- 32% d'eau,
- 2% de carboxyméthylcellulose.

Ce mélange est ensuite extrudé au travers d'une filière de 3 mm, les extrudés sont séchés à 110° C pendant 8 h, puis calcinés à 450° C pendant 2 h. Les caractéristiques des produits extrudés obtenus sont les suivantes:
SBE (surface spécifique)   = 135 m² g⁻¹
VPT (volume poreux)        = 0,32 cm³ g⁻¹ 1 kg de produit est d'abord imprégné par 310 cm³ d'une solution de sulfate d'ammonium, de manière à obtenir un rapport en poids $SO_4/TiO_2$ =0,06, puis séché à 100° C pendant 4 h.

On imprègne ensuite les produits séchés par 300 cm³ d'une solution de nitrate de calcium, de manière à obtenir un rapport en poids $Ca/TiO_2$ = 0,025. Le produit est séché à 110° C pendant 12 h.

On imprègne ce support par 300 cm³ d'une solution de nitrate ferrique, on le sèche à 110° C pendant 2 h, puis on le calcine à 450° C pendant 2 h. Le produit a les caractéristiques suivantes:
SBE     = 107 m² g⁻¹
VPT     = 0,29 cm³ g⁻¹
Fe/Ti   = 0,06

*Exemple 2 :*

On imprègne le support obtenu suivant l'exemple 1 d'une solution de nitrate ferrique et de nitrate de lanthane. Le catalyseur est séché à 110° C une nuit, puis calciné à 400° C 1 h et a les caractéristiques suivantes:
SBE = 102 m ² g⁻¹
Rapport atomique: Fe+La/Ti = 0,09; La/Fe = 2;

*Exemple 3 :*

Le catalyseur de l'exemple 1 est imprégné une deuxième fois par une solution de chlorure de palladium. Le produit est séché à 110° C 8 h, puis calciné à 350° C pendant 1 h. Le catalyseur possède les caractéristiques suivantes:
SBE = 106 m²g⁻¹
Rapport atomique: Fe + Pd/Ti = 0,0606; Fe/Pt = 200

*Exemple 4 :*

Le catalyseur de l'exemple 1 est imprégné une secnde fois par une solution d'acide chloroplatinique, séché à 110° C pendant 24 h, puis calciné à 400° C pendant 1 h. Le catalyseur possède les caractéristiques suivantes:
SBE = 103 m² g⁻¹
Rapport atomique: Fe + Pt/Ti = 0,0606; Fe/Pt = 100

*Exemple 5 :*

A une suspension d'oxyde de titane obtenue après hydrolyse et filtration dans le procédé classique d'attaque sulfurique de l'ilménite, contenant les anions sulfates en quantité telle que le rapport en poids $SO_4/TiO_2$ = 0,08, on incorpore du nitrate de calcium de manière à faire réagir tous les sulfates; le rapport en poids $Ca/TiO_2$ est alors de 0,033.

La suspension est séchée à 150° C pendant 1 h.

La poudre obtenue est malaxée pendant 2 h en présence d'eau dans les proportions suivantes:
- 64% de cette poudre,
- 26% d'eau.

Le mélange est ensuite extrudé au travers d'une filière de 4 mm, les extrudés sont séchés à 110° C pendant 4 h, puis calcinés à 400° C pendant 2 h.

Les caractéristiques du support obtenu sont les suivantes:
SBE  = 146 m² g⁻¹
VPT  = 0,35 cm³ g⁻¹

On imprègne ce support par une solution de nitrate d'argent.

Le produit est séché à 110° C pendant une nuit, puis calciné à 450° C pendant 2 h. Le catalyseur a les caractéristiques suivantes:
SBE = 117 m² g⁻¹
Rapport atomique: Ag/Ti = 0,04

*Exemple 6 :*

Le support obtenu suivant l'exemple 5 est imprégné par une solution de nitrate d'argent et de nitrate céreux; il est ensuite séché à 150° C pendant 4 h, puis calciné à 400° C pendant 2 h. Le catalyseur fini a les caractéristiques suivantes:
SBE = 126 m² g⁻¹
Rapport atomique: Ag + Ce/Ti = 0,08; Ag/Ce = 1

*Exemple 7 :*

Dans l'exemple précédent, le nitrate céreux est remplacé par du nitrate de cobalt. Le catalyseur a alors les caractéristiques suivantes:
SBE = 102 m² g⁻¹
Rapport atomique: Ag + Co/Ti = 0,07; Ag/Co = 1,5

*Exemple 8 :*

On imprègne le support obtenu suivant l'exemple 5 avec une solution d'acide métatungstique, on sèche à 150° C pendant 4 h, puis on imprègne par une solution d'acétate de néodyme/praséodyme, séché à 150° C pendant 4 h, puis calciné à 450° C pendant 2 h. Le catalyseur a les caractéristiques suivantes:

SBE = 98 m² g⁻¹

Rapport atomique: W + Nd + Pr/Ti = 0,10; W/Nd + Pr = 4

### Exemple 9:

On imprègne le support obtenu suivant l'exemple 5 avec une solution d'acide métatungstique et de nitrate de nickel, on sèche à 150° C pendant 4 h, puis on calcine à 450° C pendant 2 h. Le catalyseur a les caractéristiques suivantes:

SBE = 89 m² g⁻¹

Rapport atomique: W + Ni/Ti = 0,12; W/Ni = 2

### Exemple 10:

On malaxe pendant 1 h la poudre obtenue dans l'exemple 5 en présence d'eau et de silice microporeuse ayant une SBE de 517 m² g⁻¹ dans les proportions suivantes:

— 36% de cette poudre,

— 35% de silice,

— 29% d'eau.

Le mélange est ensuite extrudé au travers d'une filière de 4 mm, les extrudés sont séchés à 110° C pendant 2 h, puis calcinés à 400° C pendant 2 h. Le support obtenu a les caractéristiques suivantes:

SBE = 312 m² g⁻¹

VPT = 0,57 cm³ g⁻¹

On imprègne ce support par une solution de sulfate ferreux légèrement acidifiée par l'acide sulfurique. On le sèche à 150° C pendant 2 h et on le calcine à 450° C pendant 2 h. Le catalyseur a les caractéristiques suivantes:

SBE = 295 m² g⁻¹

Rapport atomique: Fe/Si + Ti = 0,05

### Exemple 11:

On imprègne le support de l'exemple 10 par une solution de chlorure cuivreux ammoniacal, on le sèche à 110° C pendant 8 h et on le calcine à 450° C pendant 2 h. Le catalyseur a les caractéristiques suivantes:

SBE = 280 m² g⁻¹

Rapport atomique: Cu/Si + Ti = 0,04

### Exemple 12:

Le catalyseur obtenu au cours de l'exemple 11 est imprégné d'une solution de métavanadate d'ammonium, séché à 150° C pendant 4 h et calciné à 400° C pendant 2 h. Le catalyseur a les caractéristiques suivantes:

SBE = 285 m² g⁻¹

Rapport atomique: Cu + V/Si + Ti = 0,06; Cu/V = 2

### Exemple 13:

Le catalyseur de l'exemple 11 est imprégné par une solution de chlorure d'iridium, séché à 110° C pendant 24 h, puis calciné à 400° C pendant 2 h. Le catalyseur a les caractéristiques suivantes:

SBE = 267 m² g⁻¹

Rapport atomique: Cu + Ir/Si + Ti = 0,06015; Cu/Ir = 400

### Exemple 14:

Le support silice/oxyde de titane utilisé dans l'exemple 10 est imprégné par une solution de paramolybdate d'ammonium, séché à 110° C une nuit, puis calciné à 450° C pendant 2 h. Le catalyseur a les caractéristiques suivantes:

SBE = 370 m² g⁻¹

Rapport atomique: Mo/Si + Ti = 0,06

### Exemple 15:

Le catalyseur de l'exemple précédent est à nouveau imprégné par une solution d'acide chromique, séché à 150° C pendant 4 h, puis calciné à 400° C pendant 2 h. Le catalyseur obtenu a les caractéristiques suivantes:

SBE = 364 m² g⁻¹

Rapport atomique: Mo + Cr/Si + Ti = 0,08; Mo/Cr = 2

### Exemple 16:

Le support silice/oxyde de titane utilisé dans l'exemple 10 est imprégné par une solution de nitrate de bismuth dans l'acide nitrique, séché à 110° C pendant 24 h, puis calciné à 450° C pendant 2 h. Le catalyseur a les caractéristiques suivantes:

SBE = 373 m² g⁻¹

Rapport atomique: Bi/Si + Ti = 0,04

### Exemple 17:

Le catalyseur de l'exemple 10 est imprégné par une solution de chlorure de rhodium, séché à 110° C pendant 24 h, puis calciné à 400° C pendant 2 h. Le catalyseur a les caractéristiques suivantes:

SBE = 371 m² g⁻¹

Rapport atomique: Bi + Rh/Si + Ti = 0,0401; Bi/Rh = 400

### Exemple 18 comparatif:

A titre comparatif, on prépare un catalyseur semblable à celui décrit à l'exemple 1 ci-dessus, mais dans lequel le support est constitué par de la silice. Les caractéristiques de ce catalyseur sont les suivantes:

SBE = 210 m² g⁻¹

VPT = 0,29 cm³ g⁻¹

Rapport atomique: Fe/Si = 0,06

Rapport en poids: Ca/SiO₂ = 0,025

Rapport en poids: SO₄/SiO₂ = 0,06

### Exemple 19 comparatif:

A titre comparatif, on prépare un catalyseur semblable à celui décrit à l'exemple 1 ci-dessus, mais dans lequel le support est constitué par une argile de type montmorillonite de rapport SiO₂/Al₂O₃ = 3. Les caractéristiques de ce catalyseur sont les suivantes:

SBE = 60 m² g⁻¹

VPT = 0,31 cm³ g⁻¹

Rapport atomique: Fe/Si + Al = 0,06

Rapport en poids: Ca/SiO₂ + Al₂O₃ = 0,025

Rapport en poids: SO₄/SiO₂ + Al₂O₃ = 0,06

*Exemple 20 comparatif:*

A titre comparatif, on prépare un catalyseur dans lequel le support est constitué par de la silice sur laquelle on a déposé successivement du nitrate de calcium $Ca(NO_3)_2$, de manière à obtenir un rapport en poids $Ca/SiO_2 = 0,025$, puis une solution de nitrate ferrique, de façon à obtenir un catalyseur présentant les caractéristiques suivantes:

SBE = 210 m² g⁻¹
VPT = 0,29 cm³ g⁻¹
Rapport atomique: Fe/Si = 0,06

Ce catalyseur, contrairement aux catalyseurs de l'exemple 1 de l'invention, ne comporte pas de sulfate de calcium mais, après calcination, de l'oxyde de calcium.

*Exemple 21 comparatif:*

A titre comparatif, on prépare un catalyseur similaire à celui décrit à l'exemple 20, mais dans lequel on remplace le nitrate de calcium par le carbonate de calcium $CaCO_3$, ce dernier étant introduit lors de la fabrication du support de silice, de manière à obtenir un rapport en poids $Ca/SiO_2 = 0,025$. Rapport en poids $CO_3/SiO_2 = 0,06$. On réalise ensuite une imprégnation avec le nitrate ferrique, de manière à obtenir un catalyseur présentant les caractéristiques suivantes:

SBE = 210 m² g⁻¹
VPT = 0,29 cm³ g⁻¹
Rapport atomique: Fe/Si = 0,06

Ce catalyseur, contrairement aux catalyseurs de l'exemple 1 de l'invention, ne comporte pas de sulfate de calcium mais, après calcination, de l'oxyde de calcium.

*Exemple 22:*

Le présent exemple illustre l'application des catalyseurs obtenus suivant les exemples précédents dans l'oxydation en phase gazeuse de l'hydrogène sulfuré et des composés organiques du soufre.

On envoie dans un réacteur contenant le catalyseur un gaz de composition volumique:

H₂S   : 800 ppm
COS   : 100 ppm
CS₂   : 500 ppm
SO₂   : 400 ppm
O₂    : 2%
H₂O   : 30%
N₂    : 67,82%

La VVh est de 1 800 et la température d'entrée des gaz est de 380° C.

Les résultats obtenus avec chacun des catalyseurs sont consignés dans le tableau I. →

Il apparaît ainsi que les catalyseurs de l'invention sont, d'une façon surprenante, nettement supérieurs aux catalyseurs décrits dans l'art antérieur et, en particulier, dans le brevet US-A N° 1 900 751.

→        *Tableau I*

| Catalyseur de l'ex. N° | Conversion de H₂S (%) | Conversion de CS₂ (%) | Conversion de COS (%) |
|---|---|---|---|
| 1 | >99 | 65 | 54 |
| 2 | >99 | 81 | 56 |
| 3 | >99 | 98 | 94 |
| 4 | >99 | 98 | 93 |
| 5 | >99 | 61 | 57 |
| 6 | >99 | 73 | 69 |
| 7 | >99 | 71 | 68 |
| 8 | >99 | 77 | 75 |
| 9 | >99 | 89 | 83 |
| 10 | >99 | 77 | 84 |
| 11 | >99 | 85 | 67 |
| 12 | >99 | 75 | 52 |
| 13 | >99 | 91 | 72 |
| 14 | >99 | 73 | 66 |
| 15 | >99 | 79 | 67 |
| 16 | >99 | 61 | 56 |
| 17 | >99 | 94 | 89 |
| 18 comparatif | 95 | 25 | 14 |
| 19 comparatif | 35 | 10 | 6 |
| 20 comparatif | 30 | 9 | 7 |
| 21 comparatif | 30 | 10 | 8 |

*Exemple 23:*

Le présent exemple illustre l'application des catalyseurs de l'invention, obtenus suivant les exemples 1 à 17 précédents, à l'oxydation d'un gaz contenant des composés organiques du soufre.

On envoie dans un réacteur contenant le catalyseur un gaz de composition volumique:

CS₂   : 1 200 ppm
COS   : 500 ppm
O₂    : 2%
H₂O   : 22%
N₂    : 74,95%

La VVh est de 1 800 et la température d'entrée des gaz 350° C.

Les résultats obtenus avec chacun des catalyseurs sont consignés dans le tableau II.

*Tableau II*

| Catalyseur de l'exemple N° | Conversion de CS₂ (%) | Conversion de COS (%) |
|---|---|---|
| 1 | 77 | 65 |
| 2 | 88 | 67 |
| 3 | >99 | 98 |
| 4 | >99 | 98 |

*Tableau II (suite)*

| Catalyseur de l'exemple N° | Conversion de $CS_2$ (%) | Conversion de COS (%) |
|---|---|---|
| 5 | 78 | 75 |
| 6 | 83 | 80 |
| 7 | 80 | 82 |
| 8 | 89 | 89 |
| 9 | 93 | 91 |
| 10 | 84 | 91 |
| 11 | 91 | 86 |
| 12 | 83 | 77 |
| 13 | 96 | 83 |
| 14 | 83 | 75 |
| 15 | 86 | 75 |
| 16 | 77 | 68 |
| 17 | 98 | 93 |

## Revendications

1. Catalyseur pour l'oxydation en anhydride sulfureux de l'hydrogène sulfuré et/ou des composés organiques du soufre et éventuellement du soufre, caractérisé en ce qu'il comporte de l'oxyde de titane ou des mélange d'oxyde de titane/zircone ou d'oxyde de titane/silice, un sulfate d'un métal alcalino-terreux et au moins un des éléments pris dans le groupe constitué par le cuivre, l'argent, le zinc, le cadmium, l'yttrium, les lanthanides, le vanadium, le chrome, le molybdène, le tungstène, le manganèse, le fer, le cobalt, le rhodium, l'iridium, le nickel, le palladium, le platine, l'étain, le bismuth.

2. Catalyseur selon la revendication 1, caractérisé en ce qu'il contient de l'oxyde de titane, un sulfate d'un métal alcalino-terreux et au moins un élément pris dans le groupe A constitué par le cuivre, l'argent, le molybdène, le tungstène, le fer et le bismuth, et au moins un élément pris dans le groupe B constitué par les lanthanides, le chrome, le cobalt, le rhodium, l'iridium, le nickel, le palladium, le platine, le vanadium et l'étain.

3. Catalyseur selon les revendications 1 et 2, caractérisé en ce que le sulfate du métal alcalino-terreux est choisi dans le groupe constitué par le calcium, le barium, le strontium et le magnésium.

4. Catalyseur selon les revendications 1, 2 et 3, caractérisé en ce que la proportion en poids, rapportée au poids du catalyseur, en oxyde de titane ou d'oxyde de titane/zircone ou d'oxyde de titane/silice dans le catalyseur varie entre 60 et 99%, plus particulièrement entre 80 et 99%.

5. Catalyseur sleon l'une des revendications précédentes, caractérisé en ce que la proportion en poids, rapportée au poids de catalyseur, en sulfate d'un métal alcalino-terreux varie entre 1 et 40%, et plus particulièrement entre 1 et 20%.

6. Catalyseur selon l'une des revendications précédentes, caractérisé en ce qu'il présente une surface spécifique, mesurée par la méthode B.E.T., comprise entre 20 et 500 m²/g, plus particulièrement entre 40 et 300 m²/g.

7. Procédé de préparation du catalyseur selon l'une des revendications précédentes, caractérisé en ce que:

1) on opère le malaxage d'un mélange comportant:
— de 1 à 40% en poids d'eau,
— de 0 à 15% en poids d'additif de mise en forme,
— de 45 à 99% en poids d'une poudre d'oxyde de titane mal cristallisé et/ou amorphe présentant une perte au feu comprise entre 1 et 50%;

2) on opère la mise en forme du mélange;

3) on sèche, puis on calcine éventuellement le corps façonné obtenu à une température comprise entre 300 et 900° C, de préférence entre 350 et 800° C;

4) on imprègne celui-ci avec le sulfate du métal alcalino-terreux ou un composé apportant l'anion sulfate et un composé apportant le cation alcalino-terreux; on sèche, puis on calcine éventuellement à une température comprise entre 300 et 900° C, de préférence entre 350 et 800° C, et

5) on imprègne le produit obtenu avec les éléments catalytiquement actifs ou leurs précurseurs (composés susceptibles de donner par chauffage ces éléments ou leurs oxydes), on sèche éventuellement, puis on calcine à une température comprise entre 300 et 900° C, de préférence entre 350 et 800° C; les composés apportant l'anion sulfate sont choisi dans le groupe comportant l'acide sulfurique et les sulfates solubles en solution aqueuse, et en particulier le sulfate d'ammonium et le sulfate d'hydroxylamine; les composés apportant le cation alcalino-terreux sont choisis dans le groupe des sels solubles en solution aqueuse d'alcalino-terreux, en particulier parmi les nitrates, chlorures, acétates des métaux alcalino-terreux; le rapport en poids en $SO_4$ et $TiO_2$ dans le catalyseur est compris entre 0,01 et 0,15, de préférence entre 0,05 et 0,10; le rapport en poids entre l'alcalino-terreux et l'oxyde de titane dans le catalyseur est compris entre 0,004 et 0,20, de préférence entre 0,02 et 0,15.

8. Procédé de préparation du catalyseur selon l'une des revendications 1 à 6, caractérisé en ce que:

1) on opère le malaxage d'un mélange comportant:
— de 1 à 40% en poids d'eau,
— de 0 à 15% en poids d'additif de mise en forme,
— de 45 à 99% en poids d'une poudre constituée d'oxyde de titane mal cristallisé et/ou amorphe, du sulfate du métal alcalino-terreux ou du mélange du composé apportant le sulfate et du composé apportant le cation alcalino-terreux, le rapport en poids en $SO_4$ et $TiO_2$ dans le mélange étant compris entre 0,01 et 0,15, de préférence entre 0,05 et 0,10; le rapport en poids entre l'alcalino-terreux et $TiO_2$ étant compris entre 0,004 et 0,20, de préférence entre 0,02 et 0,15;

2) on opère la mise en forme du mélange, on sèche puis on calcine éventuellement les produits obtenus à une température comprise entre 300 et 900° C, de préférence entre 350 et 800° C;

3) on imprègne les produits obtenus par les éléments catalytiquement actifs ou leurs précurseurs, on sèche éventuellement, puis on calcine les produits obtenus à une température comprise entre 300 et 900° C, de préférence entre 350 et 800° C.

9. Procédé de préparation du catalyseur selon l'une des revendications 1 à 6, caractérisé en ce que:

1) on opère le malaxage d'un mélange comportant:
— de 1 à 40% en poids d'eau,
— de 0 à 15% en poids d'additif de mise en forme,
— de 45 à 99% en poids d'une poudre constituée d'un composé apportant le cation alcalino-terreux et d'oxyde de titane provenant de l'attaque sulfurique de l'ilménite et contenant des anions sulfates,

le rapport en poids dans la poudre entre $SO_4$ et $TiO_2$ étant compris entre 0,01 et 0,15, de préférence entre 0,05 et 0,10, le rapport en poids dans la poudre entre l'alcalino-terreux et l'oxyde de titane étant compris entre 0,004 et 0,20, de préférence entre 0,02 et 0,15; la perte au feu de cette poudre étant comprise entre 1 et 50%;

2) on opère la mise en forme du mélange;

3) on sèche, puis on calcine éventuellement les produits obtenus à une température comprise entre 300 et 900° C, de préférence entre 350 et 800° C, et

4) on opère l'imprégnation des éléments catalytiquement actifs ou de leurs précurseurs, puis on sèche éventuellement et on calcine les produits obtenus à une température comprise entre 300 et 900° C, de préférence entre 350 et 800° C.

10. Procédé de préparation du catalyseur selon l'une des revendications 1 à 6, caractérisé en ce que:

1) on opère le malaxage d'un mélange comportant:
— de 1 à 40% en poids d'eau,
— de 0 à 15% en poids d'additif de mise en forme,
— de 45 à 99% en poids d'une poudre d'oxyde de titane provenant de l'attaque sulfurique de l'ilménite et contenant des anions sulfates,

le rapport en poids dans la poudre entre $SO_4$ et $TiO_2$ étant compris entre 0,01 et 0,15, de préférence entre 0,05 et 0,10; la perte au feu de cette poudre étant de préférence comprise entre 1 et 50%;

2) on opère la mise en forme du mélange, puis on sèche et on calcine éventuellement à une température comprise entre 300 et 900° C, de préférence entre 350 et 800° C;

3) on imprègne le produit façonné avec un composé soluble en solution aqueuse apportant le cation alcalino-terreux;

4) on sèche, puis on calcine éventuellement les produits obtenus à une température comprise entre 300 et 900° C, de préférence entre 350 et 800° C, puis on opère l'imprégnation avec les éléments catalytiquement actifs ou leurs précurseurs, et

5) on sèche éventuellement, puis on calcine les produits obtenus à une température comprise entre 300 et 900° C, de préférence entre 350 et 800° C.

11. Procédé de préparation du catalyseur selon l'une des revendications 1 à 6, caractérisé en ce que l'on opère la sulfatation d'un corps façonné à base d'oxyde de titane et contenant le cation alcalino-terreux; cette sulfatation est réalisée à une température comprise entre 250 et 550° C par un gaz contenant de préférence un mélange d'anhydride sulfureux et d'air; les rapports en poids $SO_4/TiO_2$ et métal alcalino-terreux/$TiO_2$ sont respectivement compris entre 0,01 et 0,15 et 0,004 et 0,20; les produits ainsi préparés sont ensuite éventuellement séchés, puis calcinés à une température comprise entre 300 et 900° C, de préférence entre 350 et 800° C, puis imprégnés avec les éléments catalytiquement actifs ou leurs précurseurs sous la forme de leurs sels solubles en solution aqueuse, éventuellement séchés, puis calcinés à une température comprise entre 300 et 900° C, de préférence entre 350 et 800° C.

12. Procédé d'oxydation simultanée en anhydride sulfureux de l'hydrogène sulfuré et/ou des composés organiques du soufre et éventuellement du soufre en phase gazeuse, caractérisé en ce que l'on fait passer un gaz contenant de l'hydrogène sulfuré et/ou au moins un composé organique du soufre, et éventuellement du soufre, sur le catalyseur selon l'une des revendications 1 à 6.

## Claims

1. Catalyst for the oxidation of hydrogen sulphide and/or organic sulphur compounds and, optionally, sulphur to sulphur dioxide, characterised in that it contains titanium oxide or mixtures of titanium oxide and zirconia, or mixtures of titanium oxide and silica, an alkaline earth metal sulphate and at least one of the elements from the group comprising copper, silver, zinc, cadmium, yttrium, lanthanides, vanadium, chromium, molybdenum, tungsten, manganese, iron, cobalt, rhodium, iridium, nickel, palladium, platinum, tin and bismuth.

2. Catalyst according to Claim 1, characterised in that it contains titanium oxide, an alkaline earth metal sulphate, at least one element from the group A comprising copper, silver, molybdenum, tungsten, iron and bismuth, and at least one element from the group B comprising lanthanides, chromium, cobalt, rhodium, iridium, nickel, palladium, platinum, vanadium and tin.

3. Catalyst according to Claims 1 and 2, characterised in that the alkaline earth metal sulphate is chosen from the group comprising calcium, barium, strontium and magnesium.

4. Catalyst according to Claims 1, 2 and 3, characterised in that the proportion by weight, relative to the weight of catalyst, of titanium oxide or titanium oxide/zirconia or titanium oxide/silica in the catalyst varies between 60 and 99% and more especially between 80 and 99%.

5. Catalyst according to one of the preceding claims, characterised in that the proportion by weight, relative to the weight of the catalyst, of alkaline earth metal sulphate varies between 1 and 40% and more especially between 1 and 20%.

6. Catalyst according to one of the preceding claims, characterised in that it has a specific surface area, measured by the B.E.T. method, of between 20 and 500 $m^2/g$ and more especially between 40 and 300 $m^2/g$.

7. Process for the preparation of the catalyst according to one of the preceding claims, characterised in that:

1) a mixture comprising:
— from 1 to 40% by weight of water,
— from 0 to 15% by weight of moulding additive,
— from 45 to 99% by weight of a poorly crystallised and/or amorphous titanium oxide powder exhibiting a loss on ignition of between 1 and 50%,
is malaxated;

2) the mixture is moulded;

3) the shaped body obtained is dried and then, if appropriate, calcined at a temperature of between 300 and 900° C and preferably between 350 and 800° C;

4) the body is impregnated with the alkaline earth metal sulphate or with a compound which provides the sulphate anion and a compound which provides the alkaline earth metal cation, and is dried and then, if appropriate, calcined at a temperature of between 300 and 900° C and preferably between 350 and 800° C and

5) the product obtained is impregnated with the catalytically active elements or their precursors (compounds capable of giving these elements, or their oxides, on heating), and is dried if appropriate and then calcined at a temperature of between 300 and 900° C and preferably between 350 and 800° C, the compounds providing the sulphate anion being chosen from the group comprising sulphuric acid and the sulphates which are soluble in aqueous solution, and in particular among ammonium sulphate and hydroxylamine sulphate, the compounds providing the alkaline earth metal cation being chosen from the group of alkaline earth metal salts which are soluble in aqueous solution, and in particular among the alkaline earth metal nitrates, chlorides and acetates, the weight ratio of $SO_4$ to $TiO_2$ in the catalyst being between 0.01 and 0.15 and preferably between 0.05 and 0.10, and the weight ratio of alkaline earth metal to titanium oxide in the catalyst being between 0.004 and 0.20 and preferably between 0.02 and 0.15.

8. Process for the preparation of the catalyst according to one of Claims 1 to 6, characterised in that:

1) a mixture comprising:
— from 1 to 40% by weight of water,
— from 0 to 15% by weight of moulding additive,
— from 45 to 99% by weight of a powder consisting of poorly crystallised and/or amorphous titanium oxide, alkaline earth metal sulphate or a mixture of the compound providing the sulphate and the compound providing the alkaline earth metal cation,
is malaxated, the weight ratio of $SO_4$ and $TiO_2$ in the mixture being between 0.01 and 0.15 and preferably between 0.05 and 0.10, and the weight ratio of alkaline earth metal to $TiO_2$ being between 0.004 and 0.20 and preferably between 0.02 and 0.15;

2) the mixture is moulded and the products obtained are dried and then, if appropriate, calcined at a temperature of between 300 and 900° C and preferably between 350 and 800° C, and

3) the products obtained are impregnated with catalytically active elements or their precursors, if appropriate dried and then calcined at a temperature of between 300 and 900° C and preferably between 350 and 800° C.

9. Process for the preparation of the catalyst according to one of Claims 1 to 6, characterised in that:

1) a mixture comprising:
— from 1 to 40% by weight of water,
— from 0 to 15% by weight of a moulding additive,
— from 45 to 99% by weight of a powder consisting of a compound providing the alkaline earth metal cation and titanium oxide resulting from sulphuric acid digestion of ilmenite and containing sulphate anions,
is malaxated, the weight ratio in the powder of $SO_4$ to $TiO_2$ being between 0.01 and 0.15 and preferably between 0.05 and 0.10, the weight ratio in the powder of alkaline earth metal to titanium oxide being between 0.004 and 0.20 and preferably between 0.02 and 0.15, and the loss on ignition of this powder being between 1 and 50%;

2) the mixture is moulded;

3) the products obtained are dried and then, if appropriate, calcined at a temperature of between 300 and 900° C and preferably between 350 and 800° C and

4) the impregnation with the catalytically active elements or their precursors is carried out and the products obtained are dried if appropriate and calcined at a temperature of between 300 and 900° C and preferably between 350 and 800° C.

10. Process for the preparation of the catalyst according to one of Claims 1 to 6, characterised in that:

1) a mixture comprising:
— from 1 to 40% by weight of water,
— from 0 to 15% by weight of moulding additive,
— from 45 to 99% by weight of a titanium oxide powder resulting from the sulphuric acid digestion of ilmenite and containing sulphate anions,
is malaxated, the weight ratio in the powder of $SO_4$ to $TiO_2$ being between 0.01 and 0.15 and preferably between 0.05 and 0.10, and the loss on ignition of this powder being preferably between 1 and 50%;

2) the mixture is moulded and then dried and, if appropriate, calcined at a temperature of between 300 and 900° C and preferably between 350 and 800° C;

3) the moulded product is impregnated with a compound which is soluble in aqueous solution and provides the alkaline earth metal cation;

4) the products obtained are dried and then, if appropriate, calcined at a temperature of between 300 and 900° C and preferably between 350 and 800° C, after which the impregnation with the catalytically active elements or their precursors is carried out, and

5) the products obtained are dried if appropriate and then calcined at a temperature of between 300 and 900° C and preferably between 350 and 800° C.

11. Process for the preparation of the catalyst according to one of Claims 1 to 6, characterised in that a shaped body based on titanium oxide and containing the alkaline earth metal cation is sulphated, this sulphation being carried out at a temperature of between 250 and 550° C by means of a gas preferably containing a mixture of sulphur dioxide and air, the weight ratios $SO_4/TiO_2$ and alkaline earth metal/$TiO_2$ being respectively between 0.01 and 0.15, and between 0.004 and 0.20, and the products thus prepared are subsequently dried if appropriate and then calcined at a temperature of between 300 and 900° C and preferably between 350 and 800° C, thereafter impregnated with the catalytically active elements or their precursors in the form of their salts which are soluble in aqueous solution, then dried if appropriate and thereafter calcined at a temperature of between 300 and 900° C and preferably between 350 and 800° C.

12. Process for the simultaneous oxidation of hydrogen sulphide and/or organic sulphur compounds and optionally sulphur in the gas phase to sulphur dioxide, characterised in that a gas containing hydrogen sulphide and/or at least one organic sulphur compound and optionally sulphur is passed over the catalyst according to one of Claims 1 to 6.

**Patentansprüche**

1. Katalysator für die Oxydation von Schwefelwasserstoff und/oder organischen Schwefelverbindungen und gegebenenfalls Schwefel zu Schwefeldioxid, dadurch gekennzeichnet, dass er Titanoxid oder Gemische von Titan- und Zirconiumdioxid oder von Titan- und Siliciumdioxid, ein Erdalkalisulfat und wenigstens eines der Elemente der folgenden Gruppe enthält: Kupfer, Silber, Zink, Cadmium, Yttrium, Lanthanide, Vanadium, Chrom, Molybdän, Wolfram, Mangan, Eisen, Kobalt, Rhodium, Iridium, Nickel, Palladium, Platin, Zinn und Wismuth.

2. Katalysator nach Anspruch 1, dadurch gekennzeichnet, dass er Titanoxid, ein Erdalkalisulfat und wenigstens ein Element der Gruppe A, die von Kupfer, Silber, Molybdän, Wolfram, Eisen oder Wismuth gebildet wird, und wenigstens ein Element der Gruppe B enthält, die von den Lanthaniden, Chrom, Kobalt, Rhodium, Iridium, Nickel, Palladium und Platin, Vanadium oder Zinn gebildet wird.

3. Katalysator nach einem der beiden Ansprüche 1 oder 2, dadurch gekennzeichnet, dass das Sulfat des Erdalkalimetalls unter denen von Calcium, Barium, Strontium und Magnesium gewählt wird.

4. Katalysator nach den Ansprüchen 1, 2, 3, dadurch gekennzeichnet, dass der Gewichtsanteil von Titanoxid oder Titanzirkonoxid oder Titansiliciumoxid im Katalysator, bezogen auf das Gewicht des Katalysators, 60 bis 99, insbesondere 80 bis 99%, beträgt.

5. Katalysator nach irgendeinem der vorangehenden Ansprüche, dadurch gekennzeichnet, dass der Gewichtsanteil des Erdalkalisulfats, bezogen auf das Gewicht des Katalysators, zwischen 1 und 40, insbesondere zwischen 1 und 20%, liegt.

6. Katalysator nach irgendeinem der vorangehenden Ansprüche, dadurch gekennzeichnet, dass er eine spezifische Oberfläche, gemessen nach der BET-Methode, von 20 bis 500, vorzugsweise 40 bis 300 $m^2/g$, besitzt.

7. Verfahren zur Herstellung des Katalysators nach irgendeinem der vorangehenden Ansprüche, gekennzeichnet durch folgende Verfahrensschritte:

1) Man knetet folgendes Gemisch:
— 1 bis 40 Gew.-% Wasser,
— 0 bis 15 Gew.-% eines formgebenden Zusatzes, und
— 45 bis 99 Gew.-% eines Pulvers von schlecht kristallisiertem und/oder amorphem Titanoxid mit einem Glühverlust zwischen 1 und 50%;

2) man führt die Formgebung des Gemisches durch;

3) man trocknet den erhaltenen Formkörper und calciniert ihn gegebenenfalls bei einer Temperatur zwischen 300 und 900, vorzugsweise zwischen 350 und 800° C;

4) man tränkt ihn mit einem Erdalkalisulfat oder einer das Sulfatanion liefernden Verbindung und einer das Erdalkalikation liefernden Verbindung, man trocknet und calciniert gegebenenfalls bei einer Temperatur zwischen 300 und 900, vorzugsweise zwischen 350 und 800° C;

5) man tränkt das erhaltene Produkt mit den katalytisch aktiven Elementen oder deren Vorstufen (Verbindungen, die durch Erhitzen diese Elemente oder ihre Oxide ergeben können), man trocknet gegebenenfalls und calciniert bei einer Temperatur zwischen 300 und 900, vorzugsweise zwischen 350 und 800° C; die das Sulfatanion liefernden Verbindungen werden aus der Gruppe von Schwefelsäure und den in wässeriger Lösung löslichen Sulfaten, vorzugsweise Ammoniumsulfat und Hydroxylaminsulfat gewählt; die das Erdalkali liefernden Verbindungen werden aus der Gruppe der in wässeriger Lösung löslichen Erdalkalisalze und insbesondere unter den Nitraten, Chloriden oder Acetaten der Erdalkalimetalle gewählt; das Gewichtsverhältnis von $SO_4$ und $TiO_2$ in dem Katalysator liegt zwischen 0,01 und 0,15 und vorzugsweise zwischen 0,05 und 0,10; das Gewichtsverhältnis von Erdalkali zu Titanoxid in dem Katalysator beträgt 0,004 bis 0,20, vorzugsweise 0,02 bis 0,15.

8. Verfahren zur Herstellung des Katalysators nach irgendeinem der Ansprüche 1 bis 6, gekennzeichnet durch folgende Verfahrensschritte:

1) Man knetet folgendes Gemisch:
- 1 bis 40 Gew.-% Wasser,
- 0 bis 15 Gew.-% eines formgebenden Zusatzes, und
- 45 bis 99 Gew.-% eines Pulvers, bestehend aus schlecht kristallisiertem und/oder amorphem Titanoxid, dem Erdalkalisulfat oder dem Gemisch einer Sulfat liefernden Verbindung und einer das Erdalkalikation liefernden Verbindung, wobei das Gewichtsverhältnis von $SO_4$ zu $TiO_2$ in dem Gemisch zwischen 0,01 und 0,15, vorzugsweise zwischen 0,05 und 0,10, liegt und das Gewichtsverhältnis von Erdalkali zu $TiO_2$ 0,004 bis 0,20, vorzugsweise 0,02 bis 0,15, beträgt;

2) man führt die Formgebung des Gemisches durch, man trocknet die erhaltenen Produkte und calciniert sie gegebenenfalls bei einer Temperatur zwischen 300 und 900, vorzugsweise zwischen 350 und 800° C;

3) man tränkt die erhaltenen Produkte mit den katalytisch aktiven Elementen oder ihren Vorstufen, man trocknet gegebenenfalls und calciniert dann die erhaltenen Produkte bei einer Temperatur zwischen 300 und 900, vorzugsweise zwischen 350 und 800° C.

9. Verfahren zur Herstellung des Katalysators nach irgendeinem der Ansprüche 1 bis 6, gekennzeichnet durch folgende Verfahrensschritte:

1) Man knetet folgendes Gemisch:
- 1 bis 40 Gew.-% Wasser,
- 0 bis 15 Gew.-% eines formgebenden Zusatzes, und
- 45 bis 99 Gew.-% eines Pulvers, bestehend aus einer das Erdalkalikation liefernden Verbindung und Titanoxid, das aus dem Schwefelsäureaufschluss von Ilmenit stammt und Sulfatanionen enthält, wobei das Gewichtsverhältnis von $SO_4$ zu $TiO_2$ in dem Pulver zwischen 0,01 und 0,15, vorzugsweise zwischen 0,05 und 0,10, liegt, das Gewichtsverhältnis von Erdalkali zum Titanoxid im Pulver 0,004 bis 0,20, vorzugsweise 0,02 bis 0,15, und der Glühverlust des Pulvers 1 bis 50% beträgt;

2) man führt die Formgebung des Gemisches durch;

3) man trocknet die erhaltenen Produkte und calciniert sie gegebenenfalls bei einer Temperatur zwischen 300 und 900, vorzugsweise zwischen 350 und 800° C;

4) man führt die Tränkung mit den katalytisch wirksamen Elementen oder ihren Vorstufen durch, trocknet gegebenenfalls und calciniert die erhaltenen produkte bei einer Temperatur zwischen 300 und 900, vorzugsweise zwischen 350 und 800° C.

10. Verfahren zur Herstellung des Katalysators nach irgendeinem der Ansprüche 1 bis 6, gekennzeichnet durch folgende Verfahrensschritte:

1) Man knetet ein Gemisch der folgenden Substanzen:
- 1 bis 40 Gew-% Wasser,
- 0 bis 15 Gew.-% eines formgebenden Zusatzes, und
- 45 bis 99 Gew.-% eines Pulvers von Titanoxid, das aus dem Schwefelsäureaufschluss von Ilmenit stammt und Sulfatanionen enthält, wobei das Gewichtsverhältnis von $SO_4$ zu $TiO_2$ in dem Pulver 0,01 bis 0,15, vorzugsweise 0,05 bis 0,10, und der Glühverlust dieses Pulvers vorzugsweise 1 bis 50% beträgt;

2) man führt die Formgebung des Gemisches durch, trocknet und calciniert gegebenenfalls bei einer Temperatur zwischen 300 und 900, vorzugsweise zwischen 350 und 800° C;

3) man tränkt das geformte Produkt mit einer in wässeriger Lösung löslichen, das Erdalkalikation liefernden Verbindung;

4) man trocknet die erhaltenen Produkte und calciniert sie gegebenenfalls bei einer Temperatur zwischen 300 und 900, vorzugsweise zwischen 350 und 800° C, und führt das Tränken mit den katalytisch wirksamen Elementen oder ihren Vorstufen durch;

5) man trocknet gegebenenfalls und calciniert dann die erhaltenen Produkte bei einer Temperatur zwischen 300 und 900, vorzugsweise zwischen 350 und 800° C.

11. Verfahren zur Herstellung des Katalysators nach irgendeinem der Ansprüche 1 bis 6, dadurch gekennzeichnet, dass man einen Formkörper auf Basis von Titanoxid, der das Erdalkalikation enthält, sulfatiert, wobei diese Sulfatierung bei einer Temperatur zwischen 250 und 550° C mit einem Gas durchgeführt wird, das vorzugsweise ein Gemisch von Schwefeldioxid und Luft enthält; die Gewichtsverhältnisse $SO_4/TiO_2$ und Erdalkalimetall/$TiO_2$ betragen 0,01 bis 0,15 bzw. 0,04 bis 0,20; die so erhaltenen Produkte werden dann gegebenenfalls getrocknet und bei einer Temperatur zwischen 300 und 900, vorzugsweise zwischen 350 und 800° C calciniert, dann mit den katalytisch aktiven Elementen oder ihren Vorstufen in Form ihrer löslichen Salze in wässeriger Lösung getränkt, dann gegebenenfalls getrocknet und bei einer Temperatur zwischen 300 und 900, vorzugsweise zwischen 350 und 800° C, calciniert.

12. Verfahren zur gleichzeitigen Oxidation von Schwefelwasserstoff und/oder organischen Schwefelverbindungen und gegebenenfalls Schwefel in der Gasphase zu Schwefeldioxid, dadurch gekennzeichnet, dass man ein Schwefelwasserstoff und/oder wenigstens eine organische Schwefelverbindung und gegebenenfalls Schwefel enthaltendes Gas über den Katalysator nach irgendeinem der vorangehenden Ansprüche 1 bis 6 leitet.